# EUROPEAN PATENT APPLICATION

(11) **EP 2 879 400 A1**
(43) Date of publication of application: **03.06.2015**
(21) Application number: 13822253.4
(22) Date of filing: 26.07.2013
(51) Int. Cl.: H04Q 9/00, G08C 17/02

(54) **AUTONOMOUS WIRELESS ANALYSER**

(30) Priority: 27.07.2012 ES 201200781
(71) Applicant: Tejera Palomar, Sergio, 12005 Castellón (ES); Borillo Navarro, Adrian Ruben, 12550 Almanzora (ES)
(72) Inventor: Tejera Palomar, Sergio, 12005 Castellón (ES); Borillo Navarro, Adrian Ruben, 12550 Almanzora (ES)
(74) Representative: Isern-Jara, Nuria
(86) International application number: PCT/ES2013/000182
(87) International publication number: WO 2014/016449

(57) **Abstract**

Autonomous wireless analyser which comprises, incorporated in an outer cover (2), a sensor (3), an electronic circuit (4) and a wireless transmitter (5) as well as a thermoelectric module (6) which provides and supplies energy to the other elements and is physically isolated by means of a cooling dissipator (7). Said analyser also optionally includes a battery (8) and a luminous device (9). The analyser operates individually or forms part of a complex system of one or more sets of several analysers (1) networked to a coordinating element (11) which connects said sets to the Internet (12) in order to store the information in a database (10) and to access the latter using any device with access to the IP network (13).

## Description

### OBJECT OF THE INVENTION

The invention, as stated in the title of this descriptive memory, relates to a autonomous wireless analyser, which provides several advantages and characteristics of novelty which will be described in detail hereinbelow and which represent an improvement compared to that which is already known in the current state of the art as defined within its scope.

More particularly, the object of the invention focuses on an analyser device or element for measuring parameters whose purpose is to be configured as an autonomous electronic system for monitoring and surveillance of a device or installation that can be subjected to controls having measurable parameters to monitor its operating status and avoid or prevent failures, said analyser can be energetically autonomous, to provide in situ information and to transmit the information collected wirelessly to a remote computer and/or make it accessible via the Internet.

### FIELD OF APPLICATION OF THE INVENTION

The field of application of the present invention is comprised within the industrial sector engaged in the manufacture of electronic devices, while covering the field of systems for controlling and monitoring equipment and industrial installations.

### BACKGROUND OF THE INVENTION

As a reference to the current state of the art, it should be noted that although multiple types of systems and electronic devices are known by the applicant, the existence of any having the technical, structural and constitutive characteristics similar to those the autonomous wireless analyser disclosed herein has and as claimed are unknown.

### EXPLANATION OF THE INVENTION

Specifically, the invention proposes, as already noted above, an autonomous wireless analyser which comprises an element for measuring parameters that can be applied as an autonomous electronic system for monitoring and surveillance of equipment or installation, which consists of four basic components: a sensor, an electronic circuit, a thermoelectric module (photovoltaic cells may also be used) and a wireless transmitter.

The sensor remains in contact with the sensing element, captures the parameter to be measured (temperature, motion, vibration, humidity, gas) and supplies the corresponding signal to the electronic circuit. Based on the result, the electronic circuit processes the signals and transmits them to the wireless transmitter.

This transmitter device can communicate wirelessly by any known system allowing such communication, always depending on where it is fitted, but preferably a digital broadcasting system known as ZIGBEE is used, for its low power consumption, mesh network topology and easy integration.

In turn, the electronic circuit is powered by the thermoelectric module, which is physically isolated (there may be devices that are also electrically isolated) by means of a ceramic element, or any other, which serves to prevent heat being transmitted to the electronic circuit and simultaneously serves as a refrigerator.

Optionally, the analyser includes a battery, which may be rechargeable or not, and a luminous device enabling in situ visual information to be provided in respect of the parameter to be controlled in the installation, consisting of an indicator, such as an LED, that may have several statuses (off, blinking, or continuous or even combining the status with a change of colours) depending on the status of said parameter.

The described set of elements that comprise the analyser of the invention is protected from the outside by a cover of a material or element of any kind that is suitable in each case.

The analyser can be activated as required without having to be handled internally. Once activated, the system goes on alert generating the aforementioned information in accordance with the different possible statuses of the parameters measured. The electronic device works with a current that is practically negligible to ensure safety in installations.

The electronic device can be programmed to set a desired level of the parameter to be measured. The method includes monitoring tolerance levels to establish a higher level of tolerance and lower level of tolerance according to the user's needs.

Importantly, the analyser disclosed, although it may be applied and operated individually, it can also, and preferably, be installed as part of a system composed of more analysers, each sensitive to one or different variables, fitting them in strategic points of the equipment or installation that needs to be controlled, and all of which are wirelessly connected to each other and/or with one or more coordinator elements that serve as a bridge with the computer system.

In any case, the autonomous wireless analyser can be applied to continuous monitoring and, in general, for control and analysis in any installation where a parameter has to be sensed. It resolves the problem of continuous inspection and monitoring, without the need for human intervention. It significantly reduces energy consumption by detecting, for example, loss of steam, simultaneously and in real time at all points of the installation, or for example by detecting the presence of toxic and/or dangerous gases, vibration, etc., as it is designed to measure all types of parameters.

The new autonomous wireless analyser can be applied to any type of valve or installation or any type of mechanical element due to the fact that it is an autonomous active system, which is installed in line with the process or installed on the equipment itself, but as a separate element, such that the system can be removed as desired from the element without interrupting or modifying operation thereof or the process. It conducts continuous monitoring of process performance, detecting and alerting, in real time, any anomalies that may occur in respect of the parameter to be controlled.

Therefore, the main function of the analyser is to control a variable at the point where it has been fitted. It would be a complex system for many analysers to control many variables at once.

However, as each unit is separate, there is a possibility that there may also be meters capable of controlling other variables within the same system if necessary. For example, it would be possible to fit (while measuring the temperature of a motor) vibration sensors capable of identifying a malfunction or displacement sensors detecting whether a repair of its elements, in areas that may present such problems, may be necessary.

The analyser uses minimum consumption, being possible to programme in order to request that measurement is conducted a specific number of times a day, as it is uncommon for the set variable to be constantly monitored. The rest of the time, it would be in sleep mode, unless it is requested to conduct an additional measurement. But this does not limit a continuous analysis being made, which, if requested, can always be conducted when the system or operation thereof allows for it.

The analyser may have different systems to be coupled in place, where it should be, depending on the type of measurement and said location, as it may, on occasion, be desirable to have it screwed in place, or on other occasions it may require a Velcro type system, or any other fastening system such as clamps, adhesives, magnets, etc., and may even be integrated therein.

The analyser, as a separate cell, does not require external power, as it is equipped with an autonomous power system through the thermoelectric module and, optionally, an internal battery, being able to communicate the charge level of the battery that needs to be replaced.

As noted above, although each analyser operates independently, when installing several analysers, they form a communication network, whereby the data to be transmitted, will travel along a specific path. In other words, the n element will communicate with the n + 1 and n-1, but may also communicate with the n+20, i.e., it is not necessary for the path to be linear, but it can form a network (mesh, tree, star or combination thereof, as desired).

In turn, the coordinator element is an electrical device that is exactly identical to the other analysers, with the possibility of the device incorporating a sensor and taking measurements of a specified variable. However, it has two related functions: to serve as a bridge between it and another computer system and to coordinate its own system.

The coordinator can be directly connected to a PC, Mac, tablet, or mobile phone, or other device that communicates wirelessly if so required, but it can also be connected directly to the Internet so it can be accessed from any of these devices which, in turn, can be an interface with the outside world; similarly, it can be connected to elements to activate and deactivate them depending on the measurements, such as, for example, a valve, thereby being integrated with the equipment or installation, and communicating directly with them.

In this way, each coordinator can be located in a different building in a different city in a different country and yet work together. For example, if it were a security system, the sensors could be presence sensors, being able to coordinate all presence sensors for a single building or floor via a single coordinator; but different buildings with different coordinators could be monitored and controlled from a single PC.

A new example would be a single coordinator being responsible for all temperature meters, and another for vibration meters.

The PC (or Mac, mobile, etc.) would therefore operate as a means of communication between the system and the external user. Using the software installed in such devices, it would be possible to check the measurements which have been programmed into each of the points and to monitor them. Unscheduled measurements may also be requested, i.e., if the system is programmed to measure the temperature every day at 10.00, and the user wanted to conduct another sampling at 12.00, it may be requested via this software, i.e. the coordinator, receiving the command from the PC, may request an additional sampling from one of its meters (or all of them) and even if the process allowed, for operational reasons, a request for continuous sampling.

In any case, the autonomous wireless analyser according to the invention is of major importance in terms of finance and security for four main reasons:
- Greater energy savings on locating and identifying problems in real time.
- Greatly reduced maintenance costs due to early failure detection of the process preventing total destruction of the equipment due to continued failure therethrough.
- Saving on wiring in installations.
- The monitoring of parameters in inaccessible places or complex monitoring by the operator (human presence) avoiding unnecessary dangers.

In view of the foregoing, the autonomous wireless analyser described represents an innovative structure having unknown characteristics until now, reasons which when linked to its practical usefulness, provide sufficient grounds for obtaining the privilege of exclusivity being applied for.

### DESCRIPTION OF THE DRAWINGS

As a complement of the description being made and for a better understanding of the characteristics of the invention, attached to the present descriptive memory and as an integral part of it is a set of drawings where, for purposes of illustration and in a non-limiting manner, the following is shown:
Figure number 1 shows a schematic representation of an embodiment of an autonomous wireless analyser according to the invention, wherein the main elements comprised therein can be seen.

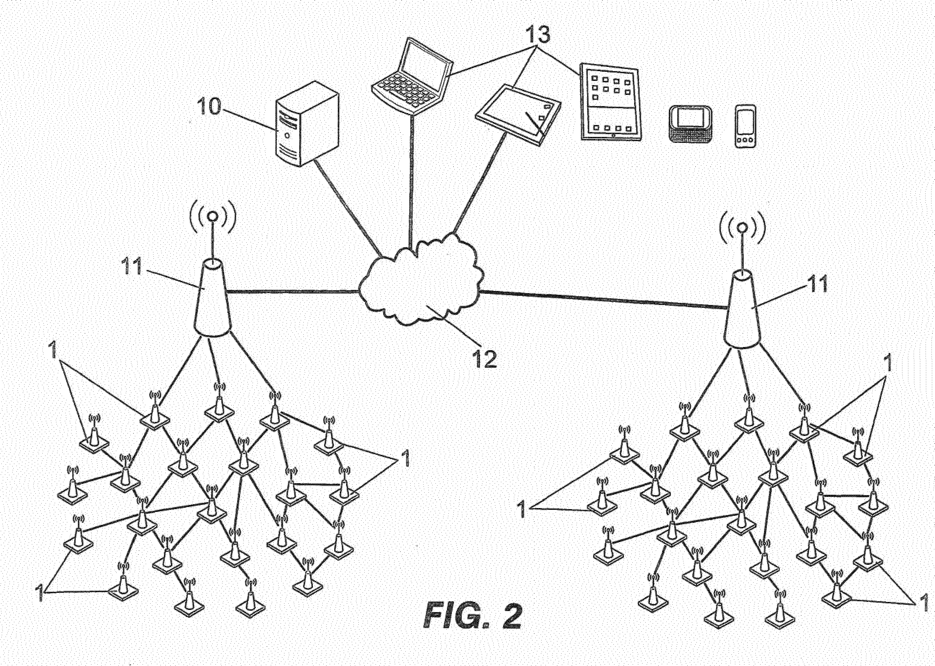

Figure 2 shows a schematic representation of a networked system to which the analyser of the invention is incorporated as a measuring unit.

### PREFERRED EMBODIMENT OF THE INVENTION

In view of the mentioned figures and according to the adopted numbering, an example of a preferred embodiment of the invention can be seen therein, which comprises the parts and elements described in detail below.

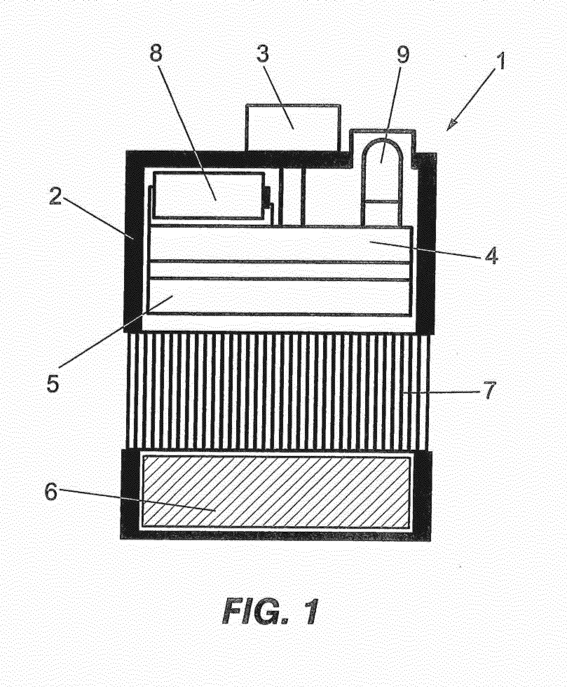

Therefore, as shown in Figure 1, the analyser (1) in question is an electronic device which, incorporated in an outer protective cover (2), comprises a sensor (3) for capturing the parameter to be measured and may be of any type (temperature, gas, vibration etc.), an electronic circuit (4) data processor and a wireless transmitter (5) which transmits said information to a computer (10), also having a thermoelectric module (6) which provides and supplies energy to the other elements, said thermoelectric module (6) being physically isolated by means of a cooling dissipator (7) which may comprise a ceramic element or any other element that is suitable for this cooling purpose.

Preferably, the wireless transmitter (5) uses a ZIGBEE digital broadcasting system.

Said analyser also optionally includes a battery (8) which may be rechargeable or not.

Optionally, the analyser incorporates a luminous device (9) as an in situ indicator of the status of the parameter measured by the sensor. Logically, this option is possible when sufficient energy is administered by the thermoelectric device or additionally a battery (8), as the luminous device (9), which is preferably an LED, requires greater energy consumption.

In respect of Figure 2, it can been seen how the analyser (1), in addition to operating individually, can be used for multiple sets forming part of a more complex system comprising one or more sets of several analysers (1) wirelessly networked to a coordinating element (11) which, in turn, wirelessly connects said sets to the Internet (12) in order to store, process and access the data from a computer (10), preferably a central server, or from any electronic device with access to the IP network (13), such as a computer, mobile phone, tablet, etc.

Having sufficiently described the nature of this invention and how to implement it, there is no need to provide further explanation for a person skilled in the art to understand its scope and advantages derived therefrom, being noted that, within its essential nature, it may be applied in other embodiments that differ in detail from that shown, by way of example, and which will also be protected, provided its fundamental principle is not altered, changed or modified.

## Claims

1. AUTONOMOUS WIRELESS ANALYSER, applicable to monitoring and surveillance of equipment or an installation that can be subjected to controlling the measurement of variable parameters, **characterised in that**, incorporated in an outer protective cover (2), it comprises a sensor (3) for capturing the parameter to be measured, an electronic circuit (4) data processor and a wireless transmitter (5) which transmits said information to a computer (10), also having a thermoelectric module (6) which provides and supplies energy to the other elements, and **in that** said thermoelectric module (6) is physically isolated by means of a cooling dissipator (7) comprising a ceramic element or any other element that is suitable for this purpose.

2. AUTONOMOUS WIRELESS ANALYSER, according to claim 1, **characterised in that** the wireless transmitter (5) uses a digital broadcasting system, preferably ZIGBEE.

3. AUTONOMOUS WIRELESS ANALYSER, according to claim 1 or 2, **characterised in that** it also includes a battery (8) which may be rechargeable or not.

4. AUTONOMOUS WIRELESS ANALYSER, according to claim 3, **characterised in that** it incorporates a luminous device (9) as an in situ indicator of the status of the parameter measured by the sensor.

5. AUTONOMOUS WIRELESS ANALYSER, according to claim 4, **characterised in that** the luminous device (9) may have various statuses (off, flashing, continuous) depending on the status of said parameter, and its status can also be shown by means of the colour changing.

6. AUTONOMOUS WIRELESS ANALYSER according to any of the claims 1-5, **characterised in that** it forms part of a complex system comprising one or more sets of several analysers (I) wirelessly networked to a coordinating element (II) which, in turn, wirelessly connects said sets to the Internet (12) in order to store, process and access the data from any computer (10), preferably from a server or from any electronic device with access to the IP network (13).
